# EUROPEAN PATENT APPLICATION

(11) **EP 4 647 148 A1**
(43) Date of publication of application: **12.11.2025**
(21) Application number: 24175115.5
(22) Date of filing: 10.05.2024
(51) Int. Cl.: B01D 61/44, B01D 61/50, H01M 8/22, H01M 8/0273

(54) **TREATMENT DEVICE**

(71) Applicant: Taiho Kogyo Co., Ltd., Toyota-shi Aichi 471-8502 (JP); Yamaguchi University, Yamaguchi 753-8511 (JP)
(72) Inventor: HORIKOSHI, Nao, Toyota-shi, Aichi-ken, 4718502 (JP); HIGA, Mitsuru, Yamaguchi, 7558611 (JP)
(74) Representative: Kuhnen & Wacker Patent- und Rechtsanwaltsbüro PartG mbB

(57) **Abstract**

Provided is a treatment device capable of suppressing the leakage of a treatment liquid. Provided is a treatment device that includes a plurality of spaces formed by a plurality of cation-exchange membranes (14) and anion-exchange membranes (13) that are arranged alternately between a cathode plate (12) and an anode plate (11), with a gasket (15) (frame member) interposed between each adjacent pair of cation-exchange membranes (14) and anion-exchange membranes (13), and that performs electrodialysis or reverse electrodialysis by allowing a treatment liquid fed from outside to flow through the plurality of spaces, in which the gasket (15) (frame member) has seal lines (154, 254) that define a range where the treatment liquid is allowed to flow.

## Description

### Technical Field

The disclosure relates to a technique for a treatment device that performs electrodialysis or reverse electrodialysis.

### Background Art

Conventionally, a technique for a treatment device that performs electrodialysis or reverse electrodialysis has been known. One example of such a technique is disclosed in Patent Literature 1.

Patent Literature 1 discloses an electrodialysis device in which concentration chambers and desalination chambers are disposed alternately, the concentration chambers and desalination chambers being formed by stacking cation-exchange membranes and anion-exchange membranes alternately, with a chamber frame interposed between each adjacent pair of the cation-exchange membrane and the anion-exchange membrane, disposing the stack between electrodes, and fastening the stack from both ends.

In the concentration chambers and the desalination chambers of such an electrodialysis device, a treatment liquid is fed from outside through a liquid feeding port penetrating the chamber frames, and the treatment liquid is discharged to the outside through a discharge liquid port penetrating the chamber frames. In the electrodialysis device, in order to suppress leakage of the treatment liquid, ribs are provided in a grid-like arrangement, on one side of the chamber frame.

However, in the configuration as described above, because the ribs are provided to each chamber frame in a manner covering substantially the entire one surface of the chamber frame, thereby sealing the chamber planarly, there is a limitation as to the degree by which the leakage of the treatment liquid is suppressed.

### Citation List

### Patent Literature

Patent Literature 1: JP 6709621 B

### Summary of Invention

### Technical Problem

The disclosure has been made in view of the issue described above, and an object of the disclosure is to provide a treatment device capable of suppressing the leakage of a treatment liquid.

### Solution to Problem

The problem to be addressed by the disclosure has been described above. Solutions to the problem will now be explained.

That is, according to claim 1, a treatment device includes a plurality of spaces formed by disposing a plurality of cation-exchange membranes and a plurality of anion-exchange membranes alternately between a cathode plate and an anode plate, with a frame member interposed between each adjacent pair of the cation-exchange membrane and the anion-exchange membrane, and that performs electrodialysis or reverse electrodialysis by allowing a treatment liquid fed from outside to flow through the plurality of spaces, the treatment device being characterized in that the frame member has a seal line defining a range where the treatment liquid is allowed to flow.

In claim 2, the seal line includes a first seal line provided in a manner surrounding a periphery of corresponding one of the spaces.

In claim 3, the frame member has a through hole that guides the treatment liquid into another frame member adjacent to the frame member, and the seal line includes a second seal line provided between the through hole and the corresponding one of the spaces.

In claim 4, the second seal line includes a channel portion that connects the through hole and the corresponding one of the spaces.

In claim 5, the through hole includes a first through hole and a second through hole; the frame member includes a first frame member and a second frame member that delineate one space and another space, respectively, that are spaces different from each other; the channel portion of the first frame member connects the first through hole, among the first through hole and the second through hole, to the one space; and the channel portion of the second frame member connects the second through hole, among the first through hole and the second through hole, to the other space.

In claim 6, the frame members adjacent to each other have shapes allowing the seal lines to abut against each other, with the cation-exchange membrane or the anion-exchange membrane interposed therebetween.

### Advantageous Effects of Invention

The disclosure achieves the following advantageous effects.

According to claim 1, it is possible to suppress leakage of the treatment liquid.

According to claim 2, it is possible to suppress external leakage of the treatment liquid.

According to claim 3, it is possible to suppress internal leakage of the treatment liquid.

According to claim 4, it is possible to feed the treatment liquid into the space using the seal line.

According to claim 5, it is possible to feed the treatment liquid into different spaces through different through holes, respectively.

According to claim 6, it is possible to further suppress leakage of the treatment liquid.

### Brief Description of Drawings

FIG. 1 is a side view illustrating an electrodialysis device according to one embodiment of the disclosure;
FIG. 2A is a cross-sectional front view taken along line A-A in FIG. 1 (a partial cross-sectional view illustrating the front side of a first gasket); and FIG. 2B is a cross-sectional back view taken along line B-B in FIG. 1 (a partial cross-sectional view illustrating the back side of the first gasket);
FIG. 3A is a cross-sectional front view taken along line C-C in FIG. 1 (a partial cross-sectional view illustrating the front side of a second gasket), and FIG. 3B is a cross-sectional back view taken along line D-D in FIG. 1 (a partial cross-sectional view illustrating the back side of the second gasket);
FIG. 4 is an exploded perspective view illustrating how an exchange membrane is held between adjacent gaskets;
FIG. 5 is a cross-sectional side view taken along line E-E in FIG. 2A; and
FIG. 6 is a cross-sectional side view taken along line F-F in FIG. 2B.

### Description of Embodiments

In the following description, directions indicated by the arrows U, D, F, B, L, and R in the drawings are defined as an upward direction, a downward direction, a frontward direction, a backward direction, a leftward direction, and a rightward direction, respectively.

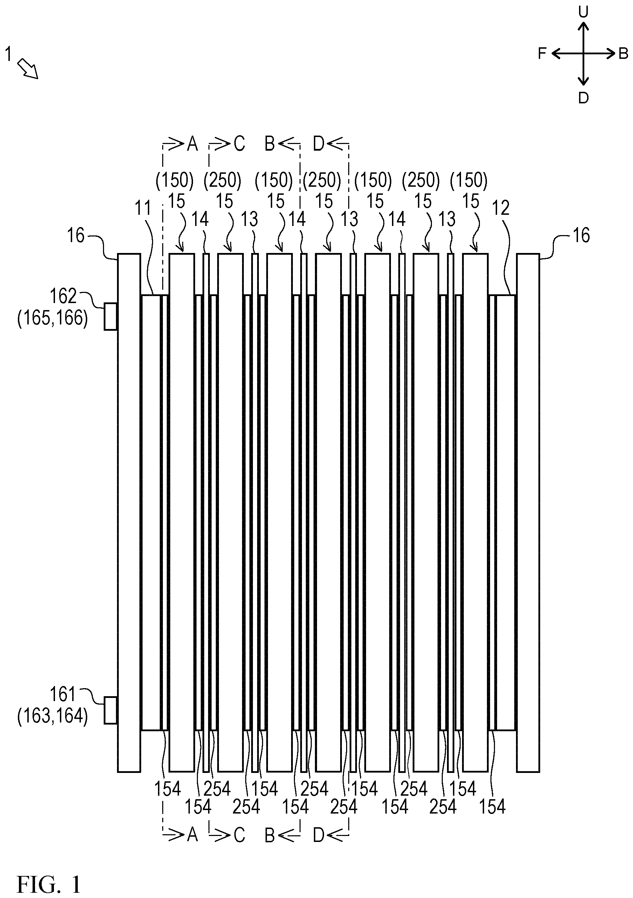

To begin with, an electrodialysis device 1 as one embodiment of a treatment device according to the disclosure will be generally described with reference to FIGS. 1, 5, 6, and the like. Each of the drawings depicts the size of each member exaggeratedly, for convenience.

The electrodialysis device 1 is a device that performs electrodialysis. The electrodialysis device 1 includes an anode plate 11, a cathode plate 12, an anion-exchange membrane 13, a cation-exchange membrane 14, a gasket 15, and a support plate 16.

Each of the anode plate 11 and the cathode plate 12 has a substantially flat plate-like shape. The anode plate 11 and the cathode plate 12 are disposed apart from each other, in a manner facing each other in the front-back direction. The anode plate 11 and the cathode plate 12 are electrically connected to each other, via a power supply. In this manner, the anode plate 11 and the cathode plate 12 are enabled to apply voltage between the anode plate 11 and the cathode plate 12.

The anion-exchange membrane 13 is a negative-ion exchange membrane. The cation-exchange membrane 14 is a positive-ion exchange membrane. Each of the anion-exchange membrane 13 and the cation-exchange membrane 14 is provided in plurality, and the anion-exchange membranes 13 and the cation-exchange membranes 14 are disposed alternately between the anode plate 11 and the cathode plate 12. The anion-exchange membranes 13 and the cation-exchange membranes 14 have appropriate holes so that the flow of a treatment liquid, to be described later, is not obstructed thereby.

The gasket 15 has a flat plate-like shape. The gasket 15 has an opening and the like, to be described later. The gasket 15 is provided in plurality, and each of the plurality of gaskets 15 is interposed between a pair of the anion-exchange membrane 13 and the cation-exchange membrane 14 that are adjacent to each other. Each of the gaskets 15 holds the anion-exchange membrane 13 together with one of two gaskets 15 that are adjacently disposed to the gasket 15 in the front-back direction, and holds the cation-exchange membrane 14 together with the other one of the two gaskets 15. The configuration of the gasket 15 will be described later in detail.

The support plate 16 is provided as a pair, and each of the support plates 16 has a substantially flat plate-like shape. The pair of support plates 16, 16 is disposed on the outer sides of the anode plate 11 and the cathode plate 12, respectively. The pair of support plates 16, 16 is fixed by fastening the members provided on the inner side (members such as the anode plate 11 and the cathode plate 12, the plurality of anion-exchange membranes 13 and the plurality of cation-exchange membranes 14, and the plurality of gaskets 15) to one another. The pair of support plates 16, 16 has feeding ports 161 through which the treatment liquid is fed from the outside, and discharge ports 162 through which the treatment liquid is discharged to the outside. The feeding ports 161 are provided below the discharge ports 162. In this manner, by circulating the treatment liquid from the lower side toward the upper side against the gravity, it is possible to suppress inclusion of gas.

In the present embodiment, two types of feeding ports 161 are provided (hereinafter, sometimes referred to as a first feeding port 163 and a second feeding port 164). There are also two types of discharge ports 162 (hereinafter, sometimes referred to as a first discharge port 165 and a second discharge port 166).

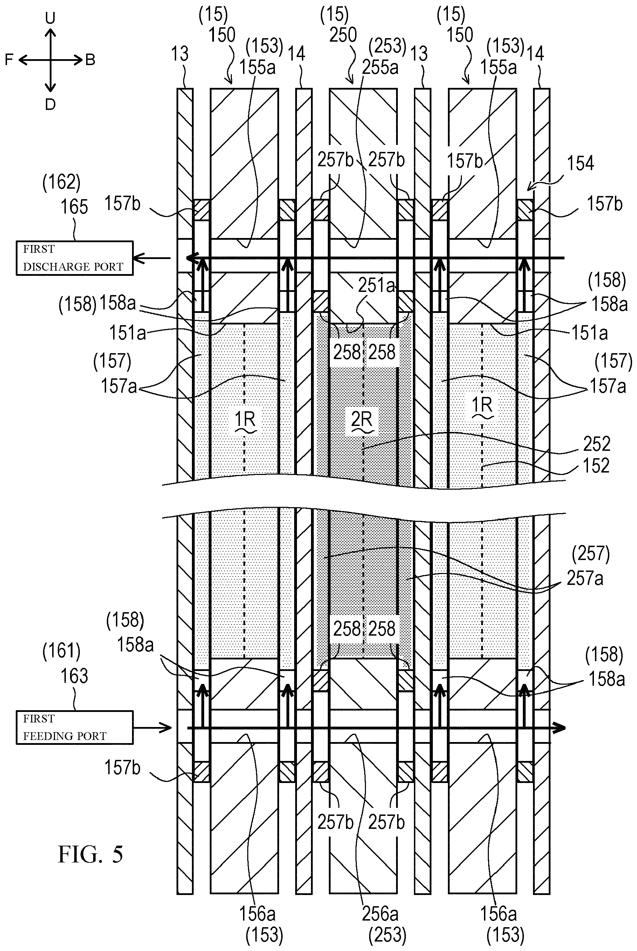

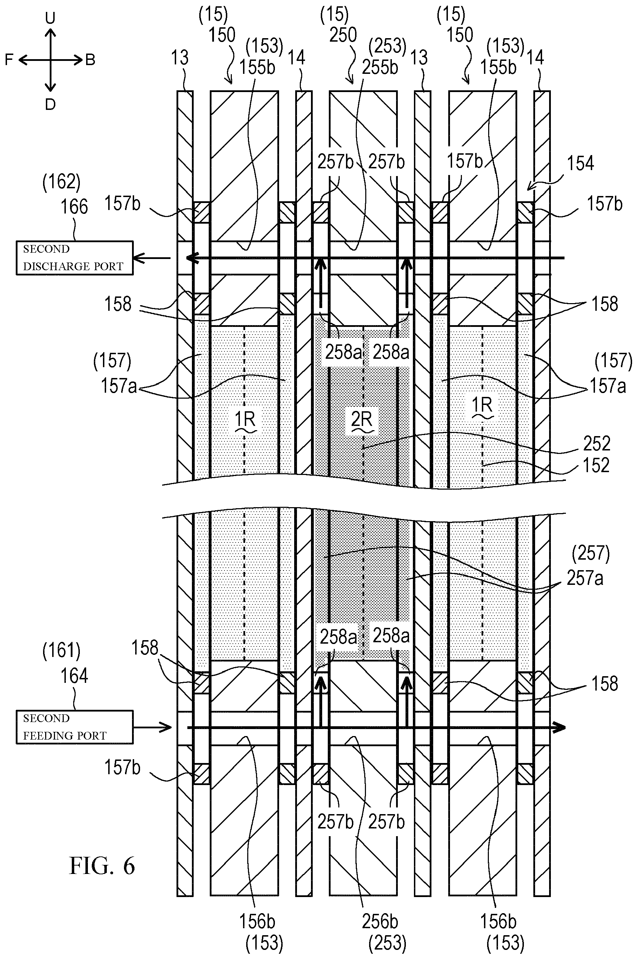

In this manner, the electrodialysis device 1 provides a plurality of spaces (desalination chambers 1R and concentration chambers 2R), between the cathode plate 12 and the anode plate 11 (see FIGS. 5 and 6), with each of the spaces defined by the anion-exchange membrane 13 and the cation-exchange membrane 14, with the gasket 15 interposed therebetween. A treatment liquid (desalination treatment liquid) is allowed to flow inside the desalination chambers 1R. A treatment liquid (concentration treatment liquid) is allowed to flow inside the concentration chambers 2R. In other words, by feeding treatment liquids into the desalination chambers 1R and the concentration chambers 2R while applying a constant voltage between the cathode plate 12 and the anode plate 11, ions in the treatment liquid in the desalination chambers 1R gradually move into the concentration chambers 2R. As a result, the ion concentration of electrolyte flowing inside the concentration chambers 2R rises, and a concentration treatment liquid having an intended high-concentration can be achieved. The configurations of the desalination chambers 1R and the concentration chambers 2R will be described later in detail.

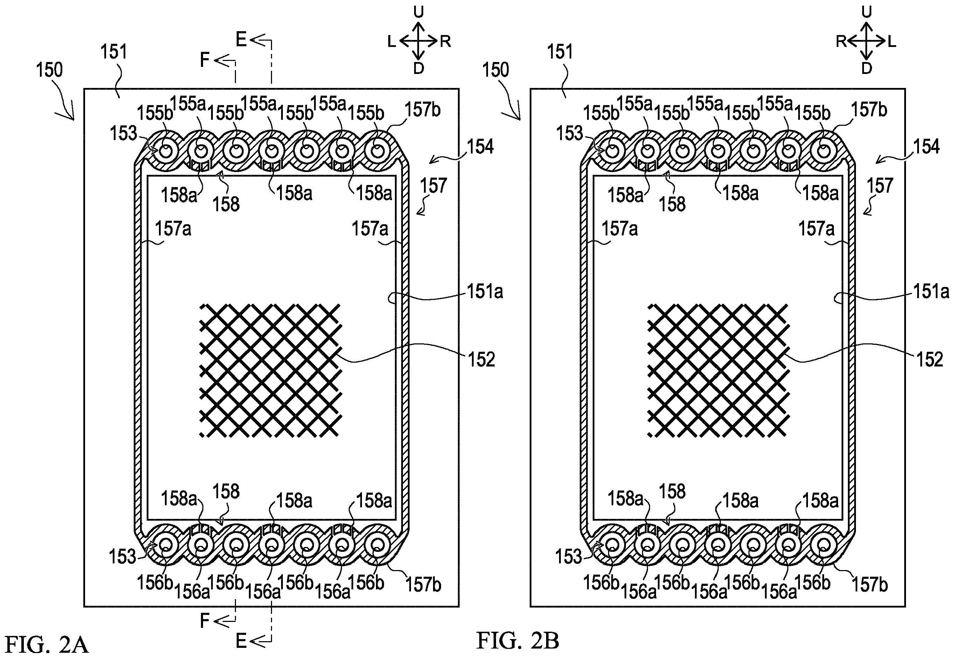

A configuration of the gasket 15 will now be described in detail with reference to FIGS. 2 to 6.

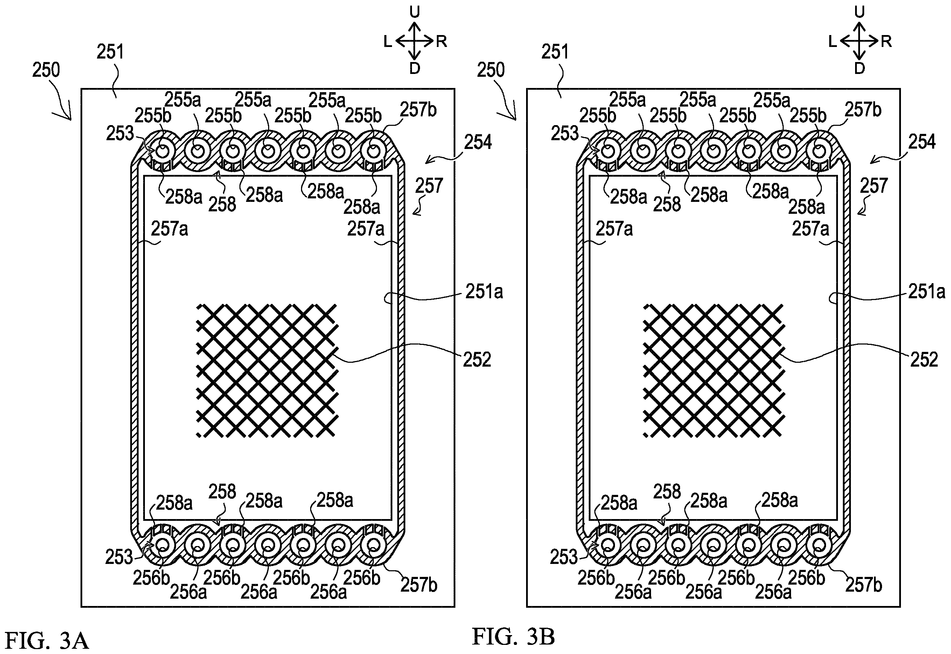

In the present embodiment, two types of gaskets 15 are provided. Hereinafter, the gasket 15 of one of the two types (the gasket illustrated in FIGS. 2A and 2B) will be referred to as a "first gasket 150", and the gasket 15 of the other type (the gasket illustrated in FIGS. 3A and 3B) will be referred to as a "second gasket 250". The first gasket 150 and the second gasket 250 form spaces that are different from each other. In the present embodiment, as illustrated in FIGS. 5 and 6, to be described later, the first gasket 150 forms the desalination chamber 1R. The second gasket 250 forms the concentration chamber 2R. To begin with, the configuration of the first gasket 150 illustrated in FIGS. 2A and 2B will be described.

As illustrated in FIGS. 2A and 2B, the first gasket 150 includes a frame portion 151, a mesh portion 152, a through hole 153, and a seal line 154.

The frame portion 151 has a substantially rectangular frame-like shape having an opening 151a at the center. The frame portion 151 is made of, for example, a resin material such as a thermosetting resin or a thermoplastic resin. The frame portion 151 is formed by applying appropriate machining, such as press working, cutting, or laser machining, to a flat plate-shaped member. The opening 151a has a substantially rectangular shape in front view.

The mesh portion 152 is provided in a manner covering the opening 151a of the frame portion 151. The mesh portion 152 is a mesh of a plurality of wires, for example. The mesh portion 152 is fixed along the periphery of the opening 151a by welding, for example. In this manner, the mesh portion 152 can prevent the anion-exchange membrane 13 and the cation-exchange membrane 14, disposed in a manner nipping the first gasket 150 therebetween, from coming into contact with each other (prevents the space between these membranes from being eliminated). In each of the drawings, illustration of the mesh portion 152 is omitted as appropriate, for convenience.

The through hole 153 penetrates the frame portion 151 in the front-back direction. That is, the through hole 153 connects the front side to the back side of the frame portion 151. The through hole 153 enables the treatment liquid to flow therethrough. The through hole 153 has a perfect circular shape in front view. The through hole 153 is provided in plurality (in the present embodiment, seven), on each of an upper part and a lower part of the frame portion 151.

These upper through holes 153 are through holes for passing the treatment liquid discharged from the desalination chambers 1R and the concentration chambers 2R. The upper through holes 153 are provided above the opening 151a of the frame portion 151. The upper through holes 153 are arranged side by side at equal intervals in the left-right direction. The upper through holes 153 are connected to the discharge ports 162 that are provided to the pair of support plates 16, 16, via the respective upper through holes 153 provided to the other gaskets 15 and the like. In the present embodiment, some of the upper through holes 153 are connected to the first discharge port 165, among the discharge ports 162. The remaining upper through holes 153 are connected to the second discharge port 166, among the discharge ports 162.

Hereinafter, the upper through holes 153 connected to the first discharge port 165 will be sometimes referred to as "first upper through holes 155a", and the upper through holes 153 connected to the second discharge port 166 will be sometimes referred to as "second upper through holes 155b". In the present embodiment, the seven upper through holes 153, which are arranged side by side in the left-right direction, include three first upper through holes 155a in total, the three including the one at the center, the second one to the left from the center, and the second one to the right from the center. The seven through holes 153 also include four second upper through holes 155b in total, the four being those other than the first upper through holes 155a.

The lower through holes 153 are through holes for passing the treatment liquid to be fed into the desalination chambers 1R and the concentration chambers 2R. The lower through holes 153 are provided below the opening 151a of the frame portion 151. The lower through holes 153 are arranged side by side at equal intervals in the left-right direction. The lower through holes 153 are connected to the feeding ports 161 that are provided to the pair of support plates 16, 16, via the respective lower through holes 153 provided to the other gaskets 15 and the like. In the present embodiment, some of the lower through holes 153 are connected to the first feeding port 163, among the feeding ports 161. The remaining lower through holes 153 are connected to the second feeding port 164, among the feeding ports 161.

Hereinafter, the lower through holes 153 connected to the first feeding port 163 will be sometimes referred to as "first lower through holes 156a", and the lower through holes 153 connected to the second feeding port 164 will be sometimes referred to as "second lower through holes 156b". The first lower through holes 156a are positioned directly below the respective first upper through holes 155a. The second lower through holes 156b are positioned directly below the respective second upper through holes 155b. In other words, in the present embodiment, the seven lower through holes 153, which are arranged side by side in the left-right direction, include three first lower through holes 156a in total, the three including the one at the center, the second one to the left from the center, and the second one to the right from the center. The seven through holes 153 also includes four second lower through holes 156b in total, the four being those other than the first lower through holes 156a.

The seal line 154 is a seal for suppressing the leakage of the treatment liquid, and has a linear shape. The seal line 154 is provided on each of the front surface and the back surface of the frame portion 151. Because the seal lines 154 provided on the front surface and the back surface of the frame portion 151 have substantially the same configuration, the configuration of the seal line 154 provided on the front surface of the frame portion 151 will be mainly described in the following description.

The seal line 154 is formed using screen printing or using a dispenser, for example. Therefore, the seal line 154 has an excellent degree of freedom in design. The seal line 154 is made of a material that has flexibility to some extent, and is elastically easily deformable, such as silicone rubber. The seal line 154 is formed in a manner surrounding the area where the treatment liquid is allowed to flow. In other words, the seal line 154 is configured to define the area (circulation range) in which the treatment liquid is allowed to flow. The seal line 154 includes a first seal line 157 and a second seal line 158.

The first seal line 157 is provided in a manner surrounding the periphery of the opening 151a. Specifically, the first seal line 157 has vertical portions 157a on the left and the right sides of the opening 151a, respectively, and horizontal portions 157b on the upper side and the lower side of the opening 151a, respectively.

The vertical portions 157a of the first seal line 157 are provided on the left side and right side of the opening 151a, respectively, in a manner extending linearly in the vertical direction. The vertical portions 157a of the first seal line 157 are provided very closely to the opening 151a.

The horizontal portions 157b of the second seal line 158 are provided to the upper and lower sides of the opening 151a, respectively, in a manner extending in the left-right direction. The horizontal portions 157b are provided on the outer side of (above) the upper through holes 153, and on the outer side of (below) the lower through holes 153, respectively. Each of the horizontal portions 157b has a wave-like shape following the contour (the semicircle) delineated by an outer portion of the upper through holes 153 or the contour delineated by an outer portion of the lower through holes 153. The horizontal portions 157b have the left end and the right ends connected to the vertical portions 157a.

The second seal lines 158 are provided in a manner extending in the left-right direction, on the upper side and the lower side of the opening 151a, respectively, and on the inner side of the respective horizontal portions 157b of the first seal line 157. Each of the second seal lines 158 has a wave-like shape following the contour (the semicircles) delineated by an inner portion of the upper through holes 153 or the contour delineated by an inner portion of the lower through holes 153. The second seal lines 158 are connected to the horizontal portions 157b of the first seal line 157. In this manner, each of the second seal lines 158 and the corresponding horizontal portion 157b of the first seal line 157 together form a seal line delineating annular shapes around the respective upper through holes 153 and lower through holes 153. Each of the second seal lines 158 is provided with channel portions 158a.

The channel portions 158a connect the upper through holes 153 and the lower through holes 153, to the opening 151a. That is, the channel portions 158a connect the upper through holes 153 and the lower through holes 153 to the space (desalination chamber 1R). Each of the channel portions 158a has a slit-like shape extending substantially in the vertical direction. The channel portions 158a are provided to each of the second seal lines 158 at positions corresponding to the first upper through holes 155a and the first lower through holes 156a, respectively (the parts of the second seal lines 158 extending between the first upper through holes 155a or the first lower through holes 156a and the opening 151a), without being provided to the positions corresponding to the second upper through holes 155b and the second lower through holes 156b.

Although detailed descriptions are omitted, the seal lines 154 are provided not only on the front surface but also on the back surface of the frame portion 151. The seal lines 154 on the back surface is provided in a manner overlapping with the seal lines 154 on the front surface, with the frame portion 151 interposed therebetween, in front view.

A configuration of the second gasket 250 will now be described with reference to FIG. 3.

The second gasket 250 generally has the same shape as that of the first gasket 150. That is, the second gasket 250 includes the same frame portion 251, mesh portion 252, through hole 253, and seal line 254, as those in the first gasket 150.

More specifically, the opening 251a of the frame portion 251 of the second gasket 250 corresponds to the opening 151a of the frame portion 151 of the first gasket 150. First upper through holes 255a, second upper through holes 255b, first lower through holes 256a, and second lower through holes 256b of the second gasket 250 correspond to the first upper through holes 155a, the second upper through holes 155b, the first lower through holes 156a, and the second lower through holes 156b of the first gasket 150, respectively. A first seal line 257 (vertical portions 257a and horizontal portions 257b) and second seal lines 258 included in the second gasket 250 correspond to the first seal line 157 (the vertical portions 157a and the horizontal portions 157b) and the second seal lines 158 of the first gasket 150, respectively.

Channel portions 258a of the second seal lines 258 in the second gasket 250 correspond to the channel portions 158a of the second seal lines 158 in the first gasket 150. The channel portions 258a connect the upper through holes 253 and the lower through holes 253 to the opening 251a. That is, the channel portions 258a connects the upper through holes 253 and the lower through holes 253 to the space (concentration chamber 2R). The channel portions 258a of the second gasket 250 are different from the channel portions 158a of the first gasket 150 in that the channel portions 258a are provided to the second seal line 258 at positions corresponding to the second upper through holes 255b and the second lower through holes 256b, respectively, without being provided to the positions corresponding to the first upper through holes 255a and the first lower through holes 256a.

Each part of the second gasket 250 (other than the channel portions 258a) has a shape overlapping with the corresponding part of the first gasket 150 in front view of the electrodialysis device 1.

As described above, in the electrodialysis device 1 according to the present embodiment, the desalination chambers 1R and the concentration chambers 2R are defined by the two types of gaskets 15 (the first gaskets 150 and the second gaskets 250). In this manner, the treatment liquid to be fed into the desalination chambers 1R and the concentration chambers 2R passes through different feeding ports 161 (the first feeding port 163 and the second feeding port 164), respectively, as will be described later. The treatment liquid discharged from the desalination chambers 1R and the concentration chambers 2R also passes through different discharge ports 162 (the first discharge port 165 and the second discharge port 166), respectively, as will be described later.

Configurations of the desalination chamber 1R and the concentration chamber 2R will now be described in detail with reference to FIGS. 5 and 6.

FIGS. 5 and 6 illustrate extractions of a part of the plurality of spaces, the part being where the desalination chamber 1R, the concentration chamber 2R, and the desalination chamber 1R are disposed sequentially from the front side to the back side. That is, in FIGS. 5 and 6, the spaces defined by the first gasket 150, the second gasket 250, and the first gasket 150 are illustrated in the order listed herein, along the direction from the front side to the back side. As described above, the opening 151a of the first gasket 150 defines a space having the front side covered by the anion-exchange membrane 13, and the back side covered by the cation-exchange membrane 14 (desalination chamber 1R). The opening 251a of the second gasket 250 defines a space having the front side covered by the cation-exchange membrane 14 and the back side covered by the anion-exchange membrane 13 (concentration chamber 2R) .

FIG. 5 is a cross-sectional side view including first upper through holes 155a, 255a, 155a that are connected to the first discharge port 165, and first lower through holes 156a, 256a, 156a that are connected to the first feeding port 163, in a part including an arrangement of a desalination chamber 1R, a concentration chamber 2R, and a desalination chamber 1R. FIG. 6 is a cross-sectional side view including the second upper through holes 155b, 255b, 155b that are connected to the second discharge port 166, and the second lower through holes 156b, 256b, 156b that are connected to the second feeding port 164, in a part including an arrangement of a desalination chamber 1R, a concentration chamber 2R, and a desalination chamber 1R.

As illustrated in FIG. 5, the channel portions 158a of the second seal lines 158 connect the desalination chambers 1R to the first upper through holes 155a and the first lower through holes 156a. In other words, the treatment liquid from the first feeding port 163 goes into the desalination chambers 1R, while the treatment liquid from the second feeding port 164 is not allowed to go into the desalination chambers 1R. The treatment liquid in the desalination chambers 1R is then discharged to the first discharge port 165, without being discharged to the second discharge port 166.

As illustrated in FIG. 6, the channel portions 258a of the second seal lines 258 connect the concentration chambers 2R to the second upper through holes 255b and the second lower through holes 256b. In other words, the treatment liquid from the second feeding port 164 goes into the concentration chambers 2R, while the treatment liquid from the first feeding port 163 is not allowed to go into the concentration chambers 2R. The treatment liquid in the concentration chambers 2R is discharged to the second discharge port 166, without being discharged to the first discharge port 165.

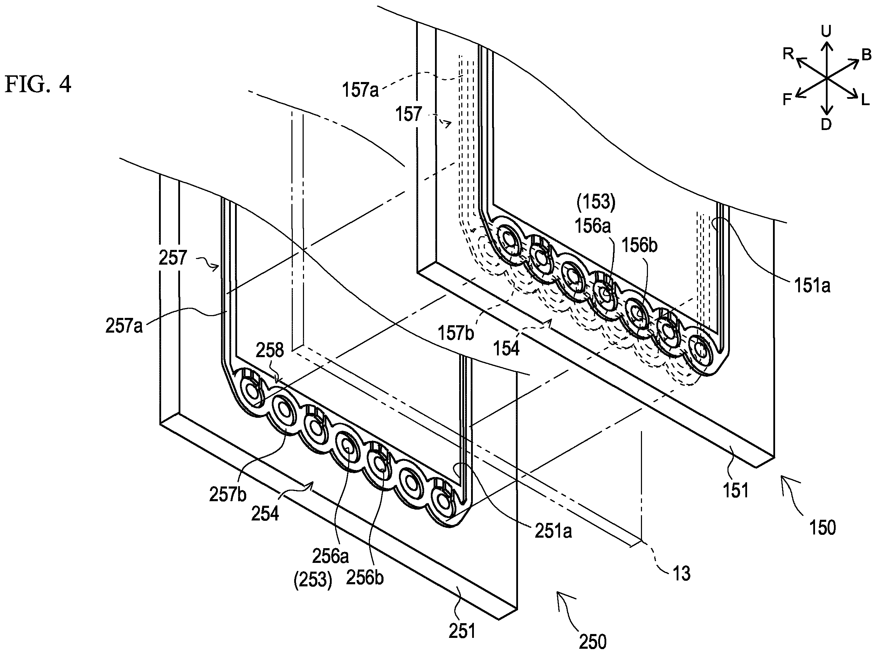

As described earlier, to define the desalination chambers 1R and the concentration chambers 2R, two adjacent gaskets 15 hold an exchange membrane (an anion-exchange membrane 13 or a cation-exchange membrane 14) therebetween, in the front-back direction. At this time, as illustrated in FIGS. 4 to 6 and the like, the two gaskets 15 that are adjacent to each other (e.g., the back first gasket 150 and the front second gasket 250 in FIG. 4) are held in contact with each other in such a manner that the seal lines 154 (the first seal line 157 and the second seal line 158) abut against the seal lines 254 (the first seal line 257 and the second seal line 258), respectively, with the anion-exchange membrane 13 interposed therebetween. That is, the seal line 154 of the first gasket 150 and the seal lines 254 of the second gasket 250 are provided in a manner meeting each other in front view, except for the parts where the channel portions 158a, 258a are provided.

In this configuration, the parts of the gasket 15 (seal lines 154, 254) coming into direct contact with the exchange membrane have a linear shape. Therefore, it is possible to increase the surface pressure on the seal lines 154, 254, effectively. Furthermore, because the exchange membrane is held between the seal lines 154, 254 that are made of a material that is elastically easily deformable, from the front side and the back side, respectively, it is possible to improve the sealability exerted by the seal lines 154, 254.

In this manner, the first seal lines 157, 257, among the seal lines 154, 254, can reduce the leakage of the treatment liquid to the outside of the electrodialysis device 1 (external leakage). Furthermore, with the second seal lines 158, 258, it is possible to reduce unintentional leakage of the treatment liquid flowing through the through holes 153, 253 into the spaces (the desalination chambers 1R and the concentration chambers 2R) (internal leakage).

Although an embodiment of the disclosure has been described above, the disclosure is not limited to the configurations described above, and various modifications may be made within the scope of the disclosure as defined in the claims.

For example, in the present embodiment, two types of gaskets 15 are provided, but the disclosure is not limited thereto, and it is also possible to provide three or more types of gaskets 15. The shape, material, arrangement, and the like of the parts of the gasket 15 (e.g., the through holes 153, 253, the seal lines 154, 254) may be set in any way.

In the present embodiment, the treatment device according to the disclosure has been described as a device for performing electrodialysis, but the treatment device may also be used as a device for performing reverse electrodialysis. In such a case, treatment liquids having different concentrations (e.g., seawater and fresh water) are fed into the spaces through the first feeding port 163 and the second feeding port 164, respectively. In this manner, in the case where the reverse electrodialysis is performed using the treatment device according to the disclosure, the ion-exchange membranes are allowed to convert the energy of the concentration difference directly into the electric power.

In a case where the treatment device according to the disclosure is used as a device for performing electrodialysis, as in the present embodiment, it is not always necessary to provide the two types of feeding ports 161. In other words, the same feeding port may be used to feed the treatment liquid into the two different spaces (the desalination chambers 1R and the concentration chambers 2R). By contrast, in a case where the treatment device according to the disclosure is used as a device for performing reverse electrodialysis, it is not always necessary to provide the two types of discharge ports 162. That is, the same discharge port may be used in discharging the treatment liquid from the two different spaces.

As described above, the treatment device according to the embodiment of the disclosure is a treatment device that includes a plurality of spaces formed by a plurality of cation-exchange membranes 14 and anion-exchange membranes 13 arranged alternately between a cathode plate 12 and an anode plate 11, with a gasket 15 (frame member) interposed between each adjacent pair of cation-exchange membranes 14 and anion-exchange membranes 13, and that performs electrodialysis or reverse electrodialysis by allowing a treatment liquid fed from outside to flow through the plurality of spaces, in which the gasket 15 (frame member) has seal lines 154, 254 defining the range where the treatment liquid is allowed to flow.

With such a configuration, it is possible to suppress the leakage of the treatment liquid in the treatment device that performs electrodialysis or reverse electrodialysis.

Furthermore, in an embodiment of the disclosure, the seal line includes first seal lines 157, 257 provided in a manner surrounding a periphery of corresponding one of the spaces.

With such a configuration, for example, it is possible to suppress the leakage of the treatment liquid to the outside of the electrodialysis device 1 (external leakage).

Furthermore, in an embodiment of the disclosure, the gasket 15 (frame member) has the through holes 153, 253 that guide the treatment liquid to another gasket 15 (frame member) adjacent thereto, and the seal line includes second seal lines 158, 258 provided between the through holes 153, 253 to the spaces.

With such a configuration, for example, it is possible to suppress unintentional leakage of the treatment liquid flowing through the through holes 153 and 253 into the spaces (the desalination chambers 1R and the concentration chambers 2R) (internal leakage).

Furthermore, in an embodiment of the disclosure, the second seal lines 158, 258 include channel portions 158a, 258a that connect the through holes 153, 253 to the spaces.

With such a configuration, it is possible to feed the treatment liquid into the spaces (the desalination chambers 1R and the concentration chambers 2R) using the second seal lines 158, 258.

Furthermore, in an embodiment of the disclosure,
the through holes include a first through hole and a second through hole; the gasket 15 (frame member) includes a first gasket 150 (frame member) and a second gasket 250 (frame member) that delineate the desalination chamber 1R (one space) and the concentration chamber 2R (another space), respectively, that are spaces different from each other;
the channel portions 158a of the first gasket 150 (frame member) connect the first upper through holes 155a and the first lower through holes 156a, among the first through holes and the second through holes, to the desalination chamber 1R (one space); and
the channel portions 258a of the second gasket 250 (frame member) connect the second upper through holes 255b and the second lower through holes 256b, among the first through holes and the second through holes, to the concentration chamber 2R (another space).

With such a configuration, it is possible to feed the treatment liquid into different spaces (the desalination chambers 1R and the concentration chambers 2R) using different through holes (that is, using the first feeding port 163 and the second feeding port 164 that are different from each other).

Further, in an embodiment of the disclosure, the gaskets 15 (frame members) adjacent to each other have shapes allowing the seal lines 154, 254 to abut against each other, with the cation-exchange membrane 14 or the anion-exchange membrane 13 interposed therebetween.

With such a configuration, it is possible to increase the surface pressure in the parts (seal lines 154, 254) of the gasket 15 that come into direct contact with the exchange membrane effectively, and to suppress the leakage of the treatment liquid effectively.

### Reference Signs List

- 1: electrodialysis device
- 11: anode plate
- 12: cathode plate
- 13: anion-exchange membrane
- 14: cation-exchange membrane
- 15: gasket
- 154: seal line
- 254: seal line

## Claims

1. A treatment device that includes a plurality of spaces (1R, 2R) formed by disposing a plurality of cation-exchange membranes (14) and a plurality of anion-exchange membranes (13) alternately between a cathode plate (12) and an anode plate (11), with a frame member (15) interposed between each adjacent pair of the cation-exchange membrane (14) and the anion-exchange membrane (13), and that performs electrodialysis or reverse electrodialysis by allowing a treatment liquid fed from outside to flow through the plurality of spaces (1R, 2R), the treatment device being **characterized in that** the frame member has a seal line (154, 254) defining a range where the treatment liquid is allowed to flow.

2. The treatment device according to claim 1, **characterized in that** the seal line (154, 254) includes a first seal line (157, 257) provided in a manner surrounding a periphery of corresponding one of the spaces (1R, 2R).

3. The treatment device according to claim 1 or 2, **characterized in that**
the frame member (15) has a through hole (153, 253) that guides the treatment liquid to another frame member (15) adjacent to the frame member (15), and
the seal line (154, 254) includes a second seal line (158, 258) provided between the through hole (153, 253) and the corresponding one of the spaces (1R, 2R).

4. The treatment device according to claim 3, **characterized in that** the second seal line (158, 258) includes a channel portion (158a, 258a) that connects the through hole (153, 253) and the corresponding one of the spaces (1R, 2R).

5. The treatment device according to claim 4, **characterized in that**:
the through hole (153, 253) includes a first through hole (155a, 156a) and a second through hole (255b, 256b),
the frame member (15) includes a first frame member (150) and a second frame member (250) that delineate one space (1R) and another space (2R), respectively, that are spaces different from each other,
the channel portion (158a) of the first frame member (150) connects the first through hole (155a, 156a), among the first through hole (155a, 156a) and the second through hole (255b, 256b), to the one space (1R), and
the channel portion (258a) of the second frame member (250) connects the second through hole (255b, 256b), among the first through hole (155a, 156a) and the second through hole (255b, 256b), to the other space (2R).

6. The treatment device according to claim 1, **characterized in that** the frame members (15) adjacent to each other have shapes allowing the seal lines (154, 254) to abut against each other, with the cation-exchange membrane (14) or the anion-exchange membrane (13) interposed between the seal lines (154, 254).
